## Europäisches Patentamt
## European Patent Office
## Office européen des brevets

(11) Veröffentlichungsnummer: **0 264 445**
**A1**

(12)
# EUROPÄISCHE PATENTANMELDUNG
Veröffentlicht nach Art. 158 Abs. 3 EPÜ

(21) Anmeldenummer: 86902580.9

(22) Anmeldetag: 20.02.86

Daten der zugrundeliegenden internationalen Anmeldung:

(86) Internationale Anmeldenummer:
PCT/SU86/00014

(87) Internationale Veröffentlichungsnummer:
WO87/04960 (27.08.87 87/19)

(51) Int. Cl.³: **B 23 Q 15/00**

(43) Veröffentlichungstag der Anmeldung:
27.04.88 Patentblatt 88/17

(84) Benannte Vertragsstaaten:
CH DE FR IT LI SE

(71) Anmelder: KIEVSKY POLITEKHNICHESKY INSTITUT
IMENI 50-LETIA VELIKOI OKTYABRSKOI
SOTSIALISTICHESKOI REVOLJUTSII
pr. Pobedy, 37
Kiev, 252056(SU)

(72) Erfinder: KOLOMEETS, Sergei Danilovich
per. Mikhailovsky, 7-20
Kiev, 252001(SU)

(72) Erfinder: KRIVOSHLYKOV, Alexei Jurievich
bulvar Lesi Ukrainki, 20-4
Kiev, 252133(SU)

(72) Erfinder: OSTAFIEV, Vladimir Alexandrovich
ul. Smolenskaya, 5/1-36
Kiev, 252057(SU)

(72) Erfinder: TYMCHIK, Grigory Semenovich
per. Kirovogradsky, 6-1
Kiev, 252039(SU)

(74) Vertreter: Ebbinghaus, Dieter et al,
v. FÜNER, EBBINGHAUS, FINCKPostfach 95 01 60
D-8000 München 95(DE)

(54) **REGELSYSTEM DES SCHNEIDESVERFAHRENS FÜR WERKZEUGMASCHINEN MIT PROGRAMMIERTER NUMERISCHER STEUERUNG.**

(57) Die vorliegende Erfindung betrifft den optischelektronischen Gerätebau und bezieht sich insbesondere auf ein System zur Steuerung eines auf spanabhebenden NC-Werkzeugmaschinen ablaufenden Schnittvorganges.

Das System enthält einen auf dem Schlitten (1) der Maschine in der Zone der Bewegungen des Werkzeuges (8) angeordneten optischen Wandler (2), der mit einem Laser (10) versehen ist, in dessen Strahlengang des Laserbündels (10') eine Schmalspaltblende (12), eine Bezugshalbebene (13), die in der Ebene der Drehachse (15) des zu bearbeitenden

./...

Werkstückes (9) liegt, ein Fourier-Objektiv (19) und eine Interfaceeinheit (3) angeordnet ist. Die Bezugshalbebene (13) befindet sich auf einer der Schneidkeilspitze (8') des Werkzeuges (8) gegenüberliegenden Seite in bezug auf das zu bearbeitende Werkstück (9) und bildet mit dem Profil der Oberfläche (17) des zu bearbeitenden Werkstückes einen optisch durchsichtigen Spalt (16). Die elektronische Interfaceeinheit (3) enthält einen Speicher (21) und einen mit diesem in Reihe geschalteten Umschalter (23), welche zwischen einem Bildempfänger (20) und einem Analog-Digital-Umsetzer (24) geschaltet sind, sowie eine Reihenschaltung aus einer Differenziervorrichtung (22), deren Eingang mit dem Ausgang des Bildempfängers (20) verbunden ist, und aus einem Impulsformer (25), dessen Ausgänge mit dem Speicher (21) und dem Umschalter (23) in Verbindung stehen.

FIG. 1

KIEVSKY POLITEKHNICHESKY INSTITUT IMENI
50-LETIA VELIKOI OKTYABRSKOI SOTSIALI-
STICHESKOI REVOLJUTSII

## Gebiet der Technik

Die vorliegende Erfindung betrifft den optisch-
-elektronischen Gerätebau und bezieht sich auf die In-
formations-Meßtechnik, insbesondere auf ein System zur
Steuerung eines auf spanabhebenden NC-Werkzeugmaschinen
ablaufenden Schnittvorganges.

## Stand der Technik

Bekannt ist eine Einrichtung zur Steuerung eines
Werkzeugspanner-Vorschubsystems, welche einen Längsvor-
schubantrieb, eine Vergleichseinrichtung und einen Steuerkanal mit einer Gegenkopplung enthält. Diese bekannte
Einrichtung dient zur Korrektur der Relativlage von Werkstück und Werkzeug sowie der Dicke einer abzuschneidenden Schicht (SU-Urheberschein Nr. 772730, Kl. B23 B25/06,
bekanntgemacht am 23.10.1980).

Jedoch wird der Metallbearbeitungsvorgang nur nach
indirekten Parametern der elastischen Verformungen der
Bauglieder des Werkzeugspanner-Vorschubsystems ohne Mit-
berücksichtigung eines Werkzeugverschleisses und kinema-
tischer Fehler der Servoantriebe des Schlittens gesteuert,
woraus sich eine geringe Genauigkeit der Fertigung von
Werkstücken ergibt. Darüber hinaus ist keine Möglichkeit
gegeben, die Oberflächenrauhigkeit zu überwachen, so
daß der Metallbearbeitungsvorgang ohne Anpassung an die
Werkstückoberflächenbeschaffenheit abläuft.

Am nächsten kommt der vorliegenden Erfindung nach
dem technischen Wesen eine Einrichtung zur Steuerung
eines Schnittvorganges (SU-Urheberschein Nr. 1076859,
Kl. G02 B 27/00, bekanntgemacht am 28.02.1984), welche
einen optischen Wandler enthält, der auf der spanabhebenden Werkzeugmaschine in der Zone der Werkzeugbewegungen
angeordnet ist und einen Laser aufweist, in dessen Laserstrahlweg eine Schmalspaltblende, eine Bezugshalbebene, die in der Ebene der Drehachse des zu bearbeitenden Werkstückes liegt, ein Fourier-Objektiv und eine elektronische Interfaceeinheit angeordnet sind, wobei die letztere mit einem Bildempfänger und einem mit diesem in Reihe geschalteten Analog-Digital-Umsetzer, der an den Eingang der numerischen Steuerung angeschlossen ist, versehen ist.

Diese Einrichtung ist für die Messung der Größe einer maßbezogenen Abnutzung des Schneidwerkzeuges und für deren automatische Kompensation durch einen vom Schlitten ausgeführten Quervorschub des Schneidwerkzeuges um einen Betrag, der dessen maßbezogener Abnutzung entspricht, geeignet.

Jedoch gestattet es diese Einrichtung nicht, kinematische Fehler der Servoantriebe des Schlittens zu überwachen. Außerdem ist die Oberflächenrauhigkeit der zu bearbeitenden Werkstücke nicht überwachbar und wird der Schlitten nur nach der Abnutzung des Schneidwerkzeuges gesteuert.

Offenbarung der Erfindung

Der Erfindung wurde die Aufgabe zugrundegelegt, ein System zur Steuerung eines auf spanabhebenden NC-Werkzeugmaschinen ablaufenden Schnittvorganges zu entwickeln, bei dem durch die konstruktive Ausführung des optischen Wandlers und der elektronischen Interfaceeinheit die Möglichkeit geboten ist, den Durchmesser und die Oberflächenrauhigkeit des zu bearbeitenden Werkstückes unmittelbar zu messen.

Die gestellte Aufgabe wird dadurch gelöst, daß im System zur Steuerung eines auf spanabhebenden NC-Werkzeugmaschinen ablaufenden Schnittvorganges, welches einen auf der spanabhebenden Werkzeugmaschine in der Zone der Werkzeugbewegungen angeordneten optischen Wandler enthält, der mit einem Laser versehen ist, in dessen Laserstrahlengang eine Schmalspaltblende, eine in der Ebene der Drehachse des zu bearbeitenden Werkstückes liegende Bezugshalbebene, ein Fourier-Objektiv und eine elektronische Interfaceeinheit angeordnet sind, die einen Bildempfänger und einen mit diesem in Reihe geschalteten Analog-Digital-Umsetzer, der an den Eingang der numerischen Steuerung angeschlossen ist, aufweist, gemäß der Erfindung der optische Wandler auf dem Schlitten der Maschine Platz findet und die Bezugshalbebene auf der der Schneidkeilspitze des Werkzeuges gegenüberliegenden Seite in bezug auf das zu bearbeitende Werkstück angeordnet ist und einen optisch durchsichtigen Spalt mit dem Profil der Oberfläche des zu bearbeitenden Werkstückes bildet, wobei die Länge der Bezugshalbebene dem Halbmesser der Einschnürung des Strahlenbündels des Lasers gleich ist, der einen Zweimodengeneratorbetrieb sichert, während die elektronische Interface eine Reihenschaltung aus einem Speicher und einem zwischen dem Bildempfänger und dem Analog-Digital-Umsetzer geschalteten Umschalter sowie eine Differenziervorrichtung, deren Eingang an den Ausgang des Bildempfängers angeschlossen ist, und einen mit dieser Vorrichtung in Reihe geschalteten Impulsformer umfaßt, dessen Ausgänge mit dem Speicher und dem Umschalter in Verbindung stehen.

Die vorliegende Erfindung gestattet es, die Fertigungsgüte der Werkstücke mit einem Fehler von höchstens 2 $\mu$m durch unmittelbare Überwachung ihres Durchmessers sowie der Rauhigkeit der zu bearbeitenden Oberfläche im Mikrorauhigkeitsbereich von 2 $\mu$m bis 40 $\mu$m zu erhöhen und die Leistung des Systems der numerischen Steuerung der Werkzeugmaschine durch Erhöhung einer Geschwindigkeit, mit der Steuerbefehle gebildet werden, und durch Verminderung der erforderlichen Speichergröße des Prozessors zu steigern, wozu eine analoge Vorverarbeitung des Bildsignals des Bildempfängers in der elektronischen Interfaceeinheit vorgenommen wird. Die genannten Vorteile ermöglichen die Verwendung des vorliegenden Systems zur Steigerung eines Schnittvorganges auf NC-Werkzeugmaschinen unter den Bedingungen einer flexiblen automatisierten Fertigung.

Kurzbeschreibung der Zeichnungen

Im folgenden wird die Erfindung an Hand der beigelegten Zeichnungen näher erläutert. Es zeigen:

Fig. 1 ein Blockschaltbild des erfindungsgemäßen Systems zur Steuerung eines auf spanabhebenden NC-Werkzeugmaschinen ablaufenden Schnittvorganges;

Fig. 2 einen Meßspalt (Draufsicht), der durch die Bezugshalbebene und das Profil der Oberfläche des zu bearbeitenden Werkstückes gebildet ist;

Fig. 3 eine elektrische Prinzipschaltung der Interfaceeinheit gemäß der Erfindung;

Fig. 4 Spannungsdiagramme in verschiedenen Punkten der Schaltung der Interfaceeinheit gemäß der Erfindung.

Bevorzugte Ausführungsform der Erfindung

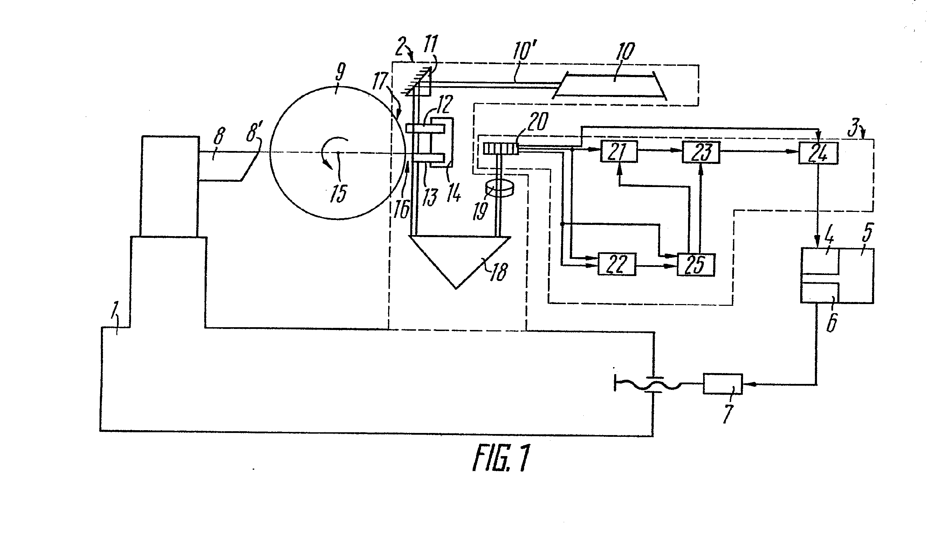

Das System zur Steuerung eines auf spanabhebenden NC-Werkzeugmaschinen, z.B. Drehmaschinen ablaufenden Schnittvorganges enthält einen auf den Schlitten 1 (Fig. 1) einer spanabhebenden Werkzeugmaschine angeordneten optischen Wandler 2, der über eine elektronische Interfaceeinheit 3 an den Eingang eines Prozessors 4 einer numerischen Steuerung 5 angeschlossen ist, dessen eigene Interfaceeinheit 6 mit einem Servoantrieb 7 der spanabhebenden Werkzeugmaschine verbunden ist, welcher Bewegungen des Schlittens 1 ausführt, in dem ein Schneidwerkzeug 8 befestigt ist, das für die Metallbearbeitung eines Werkstücks 9 bestimmt ist. Der optische Wandler 2 enthält einen Laser 10, d.h. eine kohärente Strahlungsquelle, wobei im Strahlengang hintereinander ein Umlenkprisma 11, an dessen Austritt eine Schmalspaltblende 12 eingebaut ist, und eine Bezugshalbebene 13 angeordnet sind. Die Bezugshalbebene 13 ist in einem Feststellelement 14 befestigt, wobei die Bezugshalbebene in der (strichpunktiert angedeutete) Ebene der Drehachse 15 des Werkstückes 9 liegt und mit dem Profil seiner Oberfläche 17 einen optisch durchsichtigen Spalt 16, aber auf einer Seite bildet, die der Schneidkeilspitze 8' des Werkzeuges 8 relativ zum Werkstück 8 gegenüberliegt, die in der gleichen Ebene liegt. Hinter der Bezugshalbebene 13 sind im Strahlengang des Bündels 10' ein rechtwinkliges Umkehrprisma 18 und ein Fourier-Objekt 19 der Reihe nach angeordnet, in dessen Fokussierungsebene ein zur elektronischen Interfaceeinheit 3 gehörender Bildempfänger 20 eingebaut ist. Der Bildempfänger 20 ist auf Basis einer Einkoordinatenzeile von ladungsgekoppelten Fotoempfängern aufgebaut. Einer der Eingänge des Bildempfängers 20 ist an den Eingang eines Speichers 21 und einer Differenziervorrichtung 22 parallelgeschaltet. Der Ausgang des Speichers 21 ist über einen Umschalter 23 mit einem der Eingänge eines Analog-Digital-Umsetzers 24 verbunden, während der Ausgang der Differenziervorrichtung 22 an einen Eingang eines Formers 25 angeschlossen ist, dessen Ausgänge jeweils an den übrigen Eingängen des Speichers 21 und des Umschalters 23 liegen. Der andere Ausgang des Bildempfängers 20 ist an die übrigen Eingänge der Differenziervorrichtung 22 und des Formers 25 parallelgeschaltet, während der übrige Ausgang des Empfängers 20 mit dem anderen Eingang des Analog-Digital-Umsetzers 24 in Verbindung steht, dessen Ausgang an den Ausgang des Prozessors 4 der numerischen Steuerung 5 angeschlossen ist.

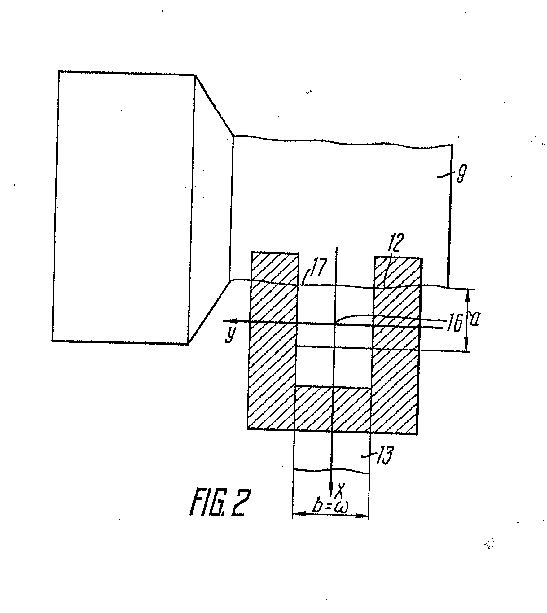

In Fig. 2 ist eine Draufsicht (im Gang des Strahlenbündels 10') des Meßspaltes 16 dargestellt, der durch die Bezugshalbebene 13 und das Profil der Oberfläche 17 des Werkstückes 9 gebildet ist. Somit ist die Breite "a" des Meßspaltes 16 gleich dem Abstand zwischen der Bezugshalbebene 13 und dem Profil der Oberfläche 17 des zu bearbeitenden Werkstückes 9, während die Breite "b" der Bezugshalbebene 13 gleich der Länge des Meßspaltes 16 und gleich dem Halbmesser "$\omega$" der Einschnürung des Strahlenbündels 10' (Fig. 1) des Lasers ist.

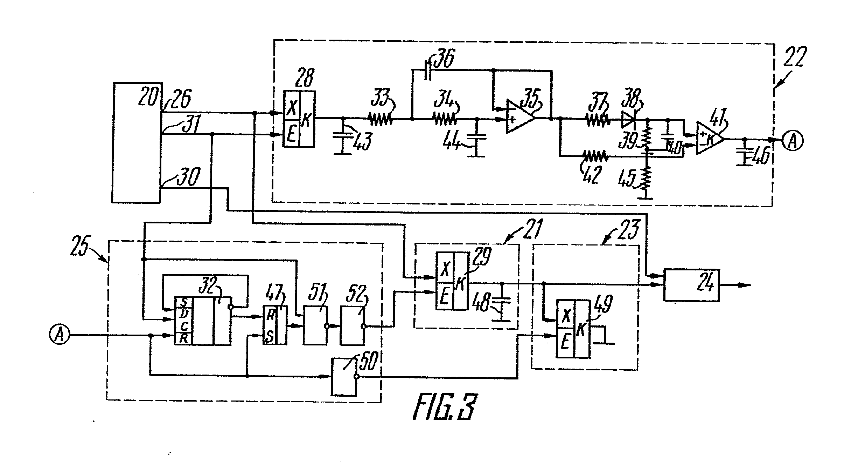

In Fig. 3 ist eine elektrische Prinzipschaltung der elektronischen Interfaceeinheit 3 gezeigt. Hierbei ist der Ausgang 26 des Bildsignalempfängers 20 an den X-Eingang eines Schalters 28 der Differenziervorrichtung 22 und an den X-Eingang eines Schalters 29 des Speichers 21 angeschlossen. Ein Taktimpulsausgang 30 für die Abtastung des Bildsignals des Empfängers 20 ist mit dem Starteingang eines Analog-Digital-Umsetzers 24 verbunden, während ein Ausgang 31, an dem Impulse zur Abfrage der Fotoelemente des Bildempfängers 20 gebildet werden, an den C-Eingang eines Zählflipflops 32 des Formers 25 und an den E-Eingang des Schalters 28 der Differenziervorrichtung 22 angeschlossen ist. Der Ausgang des Schalters 28 ist über eine Kette von Widerständen 33 und 34 an den positiven Eingang eines Operationsverstärkers 35 geschaltet, dessen Ausgang mit dessen negativem Eingang gekoppelt ist und über einen Kondensator 36 an den Verbindungspunkt des Widerstandes 33 und des Widerstandes 34 angeschlossen ist. Außerdem ist der Ausgang des Operationsverstärkers 35 über einen Widerstand 37, eine Diode 38, einen RC-Kreis, bestehend aus einem Widerstand 39 und einem Kondensator 40, an den positiven Eingang eines Komparators 41 und über einen Widerstand 42 an den negativen Eingang des Komparators 41 geschaltet. Dabei sind der Ausgang des Schalters 28 über einen Kondensator 43, der positive Eingang des Operationsverstärkers 35 über einen Kondensator 44 sowie der negative Eingang des Komparators 41 über einen Widerstand 45 und der Ausgang dieses Komparators über einen Kondensator 46 an die Sammelleitung der elektronischen Interfaceeinheit 3 geschaltet. Der Ausgang des Komparators 41 ist mit dem R-Eingang des Zählflipflops 32 und mit dem S-Eingang eines Flipflops 47 verbunden, dessen R-Eingang mit dem direkten Ausgang des Zählflipflops 32 in Verbindung steht, dessen Interfaceausgang an dessen D-Eingang angeschlossen ist. Der Ausgang des Schalters 29 ist an den Informationseingang des Analog-Digital-Umsetzers 24 und über einen Kondensator 48 an die Sammelleitung der elektronischen Interfaceeinheit 3 geschaltet. Der X-Eingang eines Schalters 49 des Umschalters 23 ist an den Ausgang des Schalters 29 und der E-Eingang über einen Negator 50 an den Ausgang des Komparators 41 geführt. Der Informationseingang des Analog-Digital-Umsetzers 24 steht mit dem X-Eingang des Schalters 49 in Verbindung. Darüber hinaus ist der Ausgang des Flipflops 47 über ein logisches UND-Glied 51 und einen Negator 52 an den E-Eingang des Schalters 29 angeschlossen, während der zweite Eingang des logischen UND-Gliedes 51 mit dem C-Eingang des Zählflipflops 32 verbunden ist.

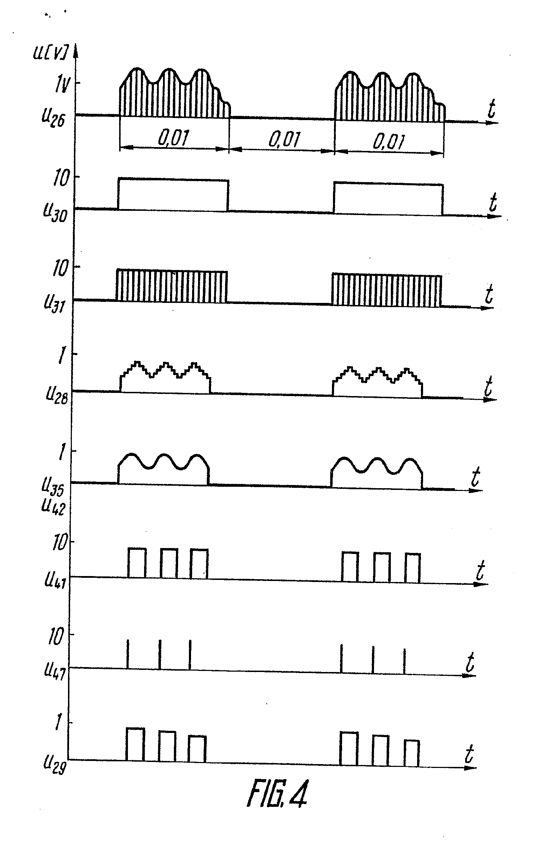

In Fig. 4 sind Spannungsdiagramme in einigen Punkten der Schaltung der elektronischen Interfaceeinheit 3 dargestellt, welche deren Wirkungsweise veranschaulichen, wobei auf der Abszissenachse die Zeit "t" in Sekunden und auf der Ordinatenachse Spannungen in Volt aufgetragen sind. Die Punkte der Schaltung sind dabei entsprechend den Bezugszeichen der zugehörigen Bauelemente bezeichnet.

Das Wesen der Wirkungsweise des Systems zur Steuerung eines auf spanabhebenden NC-Werkzeugmaschinen ablaufenden Schnittvorganges besteht im folgenden. Im Futter der spanabhebenden Werkzeugmaschine wird das Werkstück 9 gespannt, ein Quervorschub des Schneidwerkzeuges 9 durch den Schlitten 1 vorgenommen, bis der geforderte Durchmesser des Werkstücks 9 erhalten ist, und dann dessen Bearbeitung durchgeführt. Nach Ablauf eines Zeitintervalls, das in der numerischen Steuerung 5 auf programmiertem Wege vorgegeben ist, wird das Schneidwerkzeug von der Oberfläche 17 des Werkstückes 9 um einen solchen Betrag abgehoben, bei dem zwischen dem Profil der Werkstückoberfläche 17 und der Bezugshalbebene 13 ein optisch durchsichtiger Spalt 16 (Fig. 2) gebildet wird, dessen Weite zwischen etwa 50 und 1000 µm liegt. In diesem Fall wird die Quervorschubgröße des Schlittens 1 durch den Mechanismus der Servoantriebe 7 der spanabhebenden Werkzeugmaschine gemessen, während die tätsächliche Breite "a" des Spaltes 16 aus dem Ausgangsbildsignal des Empfängers 20 dadurch ermittelt wird, daß das Bildsignal einer digitalen Verarbeitung mittels des Prozessors 4 in der numerischen Steuerung 5 unterworfen wird. Eine Abweichung des Durchmessers des Werkstückes 9 vom Sollmaß entlang seiner Länge läßt sich durch eine vom Schlitten 1 ausgeführte Längsverschiebung der Bezugshalbebene 13 relativ zum Profil der Oberfläche 17 des Werkstückes 9 bestimmt. Balligkeit, kegeligkeit und andere Krümmungen des Profils der Oberfläche 17 des Werkstückes 9 führen zu größenmäßig proportionalen Änderungen der Breite "a" des Spaltes 16 bei der Bewegung des Schlittens 1 entlang des Werkstückes 9.

Bei aufeinanderfolgender Verschiebung der Bezugshalbebene 13 längs des Profils der Oberfläche 17 des Werkstückes 9 wird durch das optische System des optischen Wandlers 2 ein Beugungsbild für den Meßspalt 16 am Bildempfänger 20 erzeugt. Der längs der Koordinate $f_y = 0$ verlaufende Querschnitt der Beleuchtungsverteilung im Beugungsbild des durchsichtigen Meßspaltes 16 wird durch folgende analytische Beziehung beschrieben:

$$E(f_x,0) = \frac{E_0 \cdot b^2}{4\pi^2 \lambda^2 f^2 f_x^2} \cdot \left\{ I + J_0^2(2\pi A f_x) - 2J_0(2\pi A f_x) \cos 2\pi a f_x \right\} \qquad (I),$$

worin a die Breite des durchsichtigen Spaltes 16, A eine quadratische Mittelhöhe von Mikrorauhigkeiten (einer Rauhigkeit) des Profils der Oberfläche 17 des Werkstückes 9, b die Länge des durchsichtigen Meßspaltes 16, die dem

Radius $\omega$ der Einschnürung des Strahlenbündels 10' des Lasers 10 gleich ist, $E_0$ die Beleuchtung des durchsichtigen Spaltes, $f_x$ eine räumliche Frequenz in der Ebene des Beugungsbildes am Bildempfänger 20 sind.

Die Analyse des Ausdruckes (I) ergibt, daß die Beleuchtungsverteilung im Beugungsbild des durchsichtigen Meßspaltes 16 äquidistant angeordnete Lichtstrommaxima darstellt, deren Abstand $x_f$ umgekehrt proportional der Breite "a" des Meßspaltes 16 ist und sich ermittelt zu

$$x_f = \frac{\lambda\, l}{a} \qquad (2),$$

wobei $\lambda$ eine Wellenlänge der Strahlung des Lasers 10, l einen Abstand zwischen dem Fourier-Objektiv 19 und dem Bildempfänger 20 bedeuten. Hierbei wird die Amplitude $E_m$ der einzelnen Maxima durch die Rauhigkeitsgröße A der Oberfläche 17 des Werkstückes 9 bestimmt und durch folgende analytische Beziehung beschrieben:

$$E_m = \frac{E_0 \cdot a^2 \cdot b^2}{\pi^2 \lambda^2 f^2 (2m+I)^2} \cdot \left\{ I + J_0 \left( \frac{\pi A}{a(2m+I)} \right\}^2 \right. \qquad (3),$$

worin m für eine Ordnung eines Maximums steht. Die Auswertung des Ausdruckes (3) zeigt, daß bei Vergrößerung der Rauhigkeit A der Oberfläche 17 des Werkstückes 9 von Null an die Amplituden $E_m$ aller Maxima des Beugungsbildes des Spaltes 16 verkleinert werden und damit deren Kontrast vermindert wird.

Durch Messung des Abstandes zwischen zwei willkürlichen Maxima des Beugungsbildes des durchsichtigen Meßspaltes 16 kann man also dessen Breite "a" nach der Beziehung (2) errechnen, d.h. eine Abweichung des Durchmessers des Werkstückes 9 von dessen (gefordertem) Sollwert ermitteln. Die Rauhigkeit A der Oberfläche 17 des Werkstückes wird durch Errechnung des Verhältnisses (zum Vermeiden der Beeinflussung von Schwankungen der Strahlungsleistung des Lasers 10) von Amplituden zweier willkürlicher Maxima des Beugungsbildes des Meßspaltes 16 ermittelt. Diese Arbeitsgänge werden auf programmiertem Wege mittels des Prozessors 4 der numerischen Steuerung 5 durch digitale Verarbeitung eines Bildsignals ausgeführt, das vom Ausgang 26 des Bildempfängers 20 abgetastet wird und am Prozessor 4 über die elektronische Interfaceeinheit 3 eintrifft.

Um die Geschwindigkeit, mit der das Bildsignal durch den Analog-Digital-Umsetzer 24 abgetastet wird, zu steigern, trifft das Bildsignal (Kurve $U_{26}$ in Fig. 4) parallel am X-Informationseingang des Schalters 28 der Differenziervorrichtung 22 und am X-Eingang des Schalters 29 des Speichers 21 ein. Das Bildsignal stellt in der Zeit periodisch wiederkehrende Paketen von amplitudenmodulierten Impulsen, wobei dieses Signal auf den Bildempfänger in Form eines Lichtstromes eines Beugungsbildes des Meßspaltes 16 einfällt. Die Zahl von Informationsimpulsen in einem Paket ist gleich der Anzahl von Fotoelementen im Bildempfänger 20, während die Impulsamplituden proportional einem Lichtstrom ist, der auf die zugehörigen Fotoelemente des Bildempfängers 20 einfällt. Zum E-Eingang des Schalters 28 gelangen Impulse $U_{31}$ (Fig. 4) zur Abfrage der Fotoelemente des Empfängers 20, deren Flanken mit den Flanken der Impulse 26 des Bildsignals der Fotoelemente des Empfängers 20 zusammenfallen. Dadurch wird am Kondensator 43, der an den Ausgang des Schalters 28 eine stufenförmige Umhüllende des Bildsignals formiert, welche als Kurve $U_{28}$ in Fig. 4 dargestellt ist. Der Operationsverstärker 35 mit Kondensatoren 36, 44 und Widerständen 33 und 34 stellt ein Butterworth-Tiefpaßfilter für Tieffrequenzen zweiter Ordnung dar, das zur Glättung des stufenförmigen Bildsignals (s. die Kurve $U_{35}$ des Ausgangssignals des Operationsverstärkers 35 in Fig. 4) dient. Dieses Signal $U_{35}$ gelangt über den aus dem Widerstand 37 und der Diode 38 bestehenden Integrierkreis sowie die Widerstände 39 und den kon-

- 11 -     0264445

densator 40 zum positiven Eingang des Komparators 41. Am negativen Eingang des Komparators 41 kommt über einen aus dem Widerstand 42 und dem Widerstand 45 bestehenden Teiler ein geglättetes Bildsignal $U_{42}$ an. Am Ausgang des Komparators 41 werden Pakete von Impulsen (s. das Diagramm $U_{41}$ in Fig. 4) erzeugt, von denen jeder in seinen Flanken mit den Lagen der zwei benachbarten Extremwerte des Signals $U_{35}$ übereinstimmt, wobei die Vorderflanke mit der Lage des Maximums und die Hinterflanke mit der des Minimums zusammenfällt. Mit der Vorderflanke der Impulse $U_{41}$ werden das Zählflipflop 32 und das Flipflop 47 in den Bereitschaftszustand gebracht. Gleichzeitig treffen am C-Eingang des Zählflipflops 32 die Impulse $U_{31}$ zur Abfrage der Fotoelemente (s. das Diagramm $U_{31}$ in Fig. 4) des Bildempfängers 20 ein. Dabei liegt am nichtinvertierenden Ausgang des Zählflipflops 32 mit dem Ankommen der Vorderflanke des Impulses $U_{41}$ und der Vorderflanke des Impulses $U_{31}$ kein Signal an (es ist gleich Null) und mit dem Ankommen des nächsten Impulses $U_{31}$ wird ein auf die Amplitude bezogener 1-Impuls formiert, durch den das Flipflop 47 in den Ausgangszustand zurückgesetzt wird. Daher werden am Ausgang des Flipflops 47 Impulse (s. das Diagramm $U_{47}$ in Fig. 4) formiert, welche über ein UND-Glied 51 und einen Negator 52 am E-Eingang des Schalters 29 eintreffen. Dem zweiten Eingang des UND-Gliedes 51 werden die Impulse $U_{31}$ zur Abfrage der Fotoelemente zugeführt, was es gestattet, am Ausgang des Negators 52 Impulse zu gewinnen, deren Dauer der Dauer der zur Abfrage der Fotoelemente dienenden Impulse $U_{31}$ entspricht, wobei die zeitliche Lage dieser Impulse mit der Lage der Maxima der Impulse des Bildsignals $U_{26}$ übereinstimmt. Am Ausgang des Schalters 29, der über den Kondensator 48 mit der Sammelleitung der elektronischen Interfaceeinheit 3 gekoppelt ist, werden Signalimpulse (s. das Diagramm $U_{29}$ in Fig. 4) gebildet, wobei die Amplitude jedes Impul-

0264445

ses $U_{29}$ gleich der Amplitude des mit diesem in der Lage übereinstimmenden Maximums des Bildsignals $U_{26}$ ist und die Dauer des Impulses durch den Umschalter 23 formiert wird. Dieses Signal wird dem Informationseingang des Analog-Digital-Umsetzers 24 zugeführt und in digitalem Kode in den Prozessor 4 eingegeben, wobei der Analog-Digital-Umsetzer 24 durch die Vorderflanke jedes nur einmalig abgelesenen Impulses des Signals $U_{29}$ gestartet wird. Somit entspricht die abgelesene Amplitude jedes Impulses des Signals $U_{29}$ der Amplitude des mit diesem in der Lage übereinstimmenden Maximums des Bildsignals $U_{26}$, während das Zeitintervall zwischen zwei benachbarten Ablesungen proportional der Oszillationsperiode der Amplitude des Bildsignals $U_{26}$ am Ausgang des Bildempfängers 20 ist. Nach den Beziehungen (2) und (3) wird entsprechend dem obenbeschriebenen Algorithmus die Breite "a" des durchsichtigen Meßspaltes 16 und die Amplitude A der Rauhigkeit der Oberfläche 17 des Werkstückes 9 errechnet.

Hat der Durchmesser des Werkstückes 9 Abweichungen vom Sollwert, so wird proportional dazu die Breite "a" des durchsichtigen Meßspaltes 16 geändert, wobei der Zahlenwert dieser Abweichungen entsprechend dem obenbeschriebenen Algorithmus nach der mittleren Periode der Oszillationen des Bildsignals $U_{26}$ ermittelt wird. Um den geforderten (Nenn-) Durchmesser des Werkstückes 9 zu erhalten, wird ein Quervorschub des Schneidwerkzeuges 8 durch den Schlitten 1 um einen Betrag vorgenommen, der der Restzugabe entspricht. Bei einer Vergrößerung der Rauhigkeit A der Oberfläche 17 des Werkstückes 9 wird durch die numerische Steuerung 5 ein Befehl zur Verminderung der Geschwindigkeit des Quervorschubs des Schneidwerkzeuges formiert, was zur Verbesserung der Güte der Oberfläche 17 des zu bearbeitenden Werkstückes 9 führt. Auf solche Weise wird durch das erfindungsgemäße System der numerischen Steuerung eine adaptive Korrektur von Schnittintensitäten unter Verwendung der direkten Überwachung der Güte des zu bearbeitenden Werkstücks - des Durchmessers (Maßes) und der Oberflächenrauhigkeit - vorgenommen.

Die Vorteile des vorliegenden Systems zur Steuerung eines Schnittvorganges im Vergleich zu den bekannten bestehen darin, daß durch direkte kontaktlose Überwachung des Werkstückdurchmessers Einflüsse kinematischer Fehler der Servoantriebe des Schlittens, dynamischer Verformungen des Werkzeugspanner-Vorschubsystems, eines maßbezogenen Verschleisses des Schneidwerkzeuges und seiner Positionierfehler automatisch vermieden werden, wodurch die Fertigungsgenauigkeit bei der Drehmetallbearbeitung von Werkstücken unter den Bedingungen der flexiblen automatisierten Fertigung bis auf 2 $\mu$m erhöht wird. Außerdem wird erfindungsgemäß auch die Überwachung der Rauhigkeit der Werkstückoberfläche und die Korrektur von Schnittintensitäten vorgenommen, um die Oberflächenrauhigkeit zu verringern.

### Industrielle Anwendbarkeit

Die Erfindung kann in der Metallbearbeitung und im Maschinenbau zur Steuerung eines auf spanabhebenden NC--Werkzeugmaschinen ablaufenden Schnittvorganges unter den Bedingungen einer flexiblen automatisierten Fertigung verwendet werden.

PATENTANSPRUCH

System zur Steuerung eines auf spanabhebenden NC-
-Werkzeugmaschinen ablaufenden Schnittvorganges, welches
einen auf der spanabhebenden Werkzeugmaschine in der
Zone der Werkzeugbewegungen angeordneten optischen Wandler (2) enthält, der mit einem Laser (10) versehen ist, in
dessen Strahlengang des Bündels (10') eine Schmalspaltblende (12), eine in der Ebene der Drehachse (15)
des zu bearbeitenden Werkstückes (9) liegende Bezugshalbebene (13), ein Fourier-Objektiv (19) und eine elektronische Interfaceeinheit (3) angeordnet sind, die einen
Bildempfänger (20) und einen mit diesem elektrisch verbundenen Analog-Digital-Umsetzer (24) umfaßt, der an den
Eingang der numerischen Steuerung (5) angeschlossen ist,
d a d u r c h  g e k e n n z e i c h n e t, daß der opti-
sche Wandler (2) auf dem Schlitten (1) der Maschine Platz
findet und die Bezugshalbebene (13) auf der der Schneidkeilspitze (8') des Werkzeuges (8) gegenüberliegenden
Seite in bezug auf das zu bearbeitende Werkstück (9)
angeordnet ist und einen optisch durchsichtigen Spalt
(16) mit dem Profil der Oberfläche (17) des zu bearbeitenden Werkstückes (9) bildet, wobei die Länge der Be-
zugshalbebene (13) dem Halbdurchmesser ( $\omega$ ) der Ein-
schnürung des Strahlenbündels (10') des Lasers (10)
gleich ist, der einen Zweimodengeneratorbetrieb sichert,
während die elektronische Interfaceeinheit (3) auch einen Speicher (21), einen Umschalter (23), eine Differenziervorrichtung (22) und einen Impulsformer (25) aufweist, wobei einer der Ausgänge des Bildempfängers (20)
an einen Eingang des Analog-Digital-Umsetzers (24) angeschlossen ist und der andere Ausgang des Bildempfängers (20) an einem Eingang des Speichers (21) und einem
Eingang der Differenziervorrichtung (22) liegt, deren
Eingang mit dem anderen Ausgang des Bildempfängers (20)
und einem Eingang eines Impulsformers (25) verbunden
ist, dessen Eingang an den Ausgang der Differenziervorrichtung (22) und deren Ausgänge an den anderen Eingang des Speichers (21) und einen Eingang des Umschalters (23) geschaltet sind, dessen anderer Eingang und Ausgang mit dem Ausgang des Speichers (21) bzw. dem anderen Eingang des Analog-Digital-Umsetzers (24) verbunden ist.

FIG. 1

1/4

0264445

FIG. 2

0264445

FIG.3

FIG. 4

0264445

# INTERNATIONAL SEARCH REPORT

International Application No PCT/SU 86/00014

## I. CLASSIFICATION OF SUBJECT MATTER (if several classification symbols apply, indicate all) *

According to International Patent Classification (IPC) or to both National Classification and IPC

IPC⁴ B 23 Q 15/00

## II. FIELDS SEARCHED

### Minimum Documentation Searched 7

| Classification System | Classification Symbols |
|---|---|
| IPC⁴ | B 23 Q 15/00, G 02 B 27/00 |

### Documentation Searched other than Minimum Documentation to the Extent that such Documents are included in the Fields Searched 8

DD, B 23 Q 15/28

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | DE, C2, 2165926, (Cincinnati Milacron Inc.), 09 June 1982 (09.06.82), see the claims, fig. 5 | 1 |
| A | DD, A1 220124, (Technische Hochschule Otto von Guericke), 20 May 1985 (20.05.85), see fig. 1 | 1 |
| A | SU, A1, 1076859, (Kievsky ordena Lenina politekhnichesky institut im. 50-letia Velikoi Oktyabrskoi sotsialisticheskoi revoljutsii), 28 February 1984 (28.02.84), see the abstract, fig. 1 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 27 August 1986 (27.08.86) | 05 November 1986 (05.11.86) |

| International Searching Authority | Signature of Authorized Officer |
|---|---|
| ISA/SU | |

Form PCT/ISA/210 (second sheet) (January 1985)